# EUROPÄISCHE PATENTSCHRIFT

(11) **EP 0 793 694 B1**
(45) Veröffentlichungstag und Bekanntmachung des Hinweises auf die Patenterteilung: **17.05.2000**
(21) Anmeldenummer: 95937810.0
(22) Anmeldetag: 21.10.1995
(51) Int. Cl.: C09D 163/00, C09D 183/00, C08G 59/06

(54) **BESCHICHTUNGSMITTEL AUF DER BASIS EINER STERISCH STABILISIERTEN, NICHTWÄSSRIGEN DISPERSION, VERFAHREN ZU DEREN HERSTELLUNG SOWIE IHRE VERWENDUNG ZUR BESCHICHTUNG VON EMBALLAGEN**
COATING AGENTS BASED ON A STERICALLY STABLIZED, NON-AQUEOUS DISPERSION, PROCESS FOR THEIR PREPARATION AND THEIR USE FOR COATING PACKAGING
AGENTS DE REVETEMENT A BASE D'UNE DISPERSION NON AQUEUSE STABILISEE DE MANIERE STERIQUE, LEUR PROCEDE DE PREPARATION ET LEUR UTILISATION POUR RECOUVRIR DES EMBALLAGES

(30) Priorität: 23.11.1994 DE 4441684
(43) Veröffentlichungstag der Anmeldung: 10.09.1997
(73) Patentinhaber: PPG Industries Ohio, Inc., Cleveland, OH 44111 (US)
(72) Erfinder: VOGDANIS, Lazaros, D-48157 Münster (DE); SCHMITZ, Arno, D-48165 Münster (DE)
(74) Vertreter: Patentanwälte Sternagel & Fleischer
(86) Internationale Anmeldenummer: EP9504127
(87) Internationale Veröffentlichungsnummer: WO9616133

(56) Entgegenhaltungen:
- EP-A- 0 321 088
- WO-A-93/04104
- US-A- 4 568 735
- US-A- 4 579 887
- US-A- 4 596 861
- US-A- 4 608 406

## Beschreibung

Gegenstand der vorliegenden Anmeldung ist ein Beschichtungsmittel auf der Basis einer sterisch stabilisierten, nichtwäßrigen Dispersion, die dadurch herstellbar ist, daß in einem organischen Lösemittel in Gegenwart eines Dispersionsstabilisators mindestens ein Epoxidharz (A) mit im Mittel mindestens 2 Epoxidgruppen pro Molekül mit mindestens einem Diol (B) der Formel HOROH (I), in der R eine Gruppe der Formel -Ph-D-Ph- (II) ist, worin -Ph- eine Phenylen- und D eine Methylen- oder eine Propylengruppe ist, und ggf. mit einer weiteren Komponente (C), die gegenüber Epoxid- oder Hydroxylgruppen reaktive Gruppen aufweist, umgesetzt wird.

Die vorliegende Anmeldung betrifft außerdem noch ein Verfahren zur Herstellung der Beschichtungsmittel sowie deren Verwendung für die Beschichtung von Emballagen.

Zur Herstellung einer Dose für den Einsatz als Verpackungsmaterial, insbesondere für die Verpackung von Lebensmitteln, werden Bleche aus Weißblech, chromatiertem Stahl und Aluminium in Tafel- oder Bandform beschichtet. Die Lackschicht wirkt als Schutzschicht, um das Metall vor dem Angriff des Füllgutes und daraus resultierender Korrosion einerseits zu schützen und um andererseits eine Beeinflussung des Füllgutes durch Korrosionsprodukte des Metalles zu verhindern. Selbstverständlich darf es auch durch die Lackschicht selbst, etwa durch herausgelöste Lackbestandteile, zu keiner Beeinflussung bzw. Beeinträchtigung des Füllgutes kokmmen, weder bei der im Falle der Lebensmittelverpackungen im Anschluß an die Abfüllung durchgeführten Sterilisation des Füllgutes noch bei der anschließenden Lagerung der verpackten Güter. Im Falle der technischen Verpackungen handelt es sich oftmals um chemisch reaktive bzw. aggressive Füllgüter, gegen die die Lackschichten ebenfalls beständig sein sollten. Weiterhin müssen die Lacke derart aufgebaut sein, daß sie den bei der Weiterverarbeitung der beschichteten Bleche zu den Dosen auftretenden mechanischen Beanspruchungen, etwa beim Verformen, Stanzen, Bördeln und Sicken der Bleche, standhalten.

Typischerweise werden die sogenannten Goldlacke auf Basis eines oder mehrerer Epoxidharze sowie eines oder mehrerer Phenolharze als Blechemballagen-Innenschutzlacke eingesetzt. Nachteilig bei diesen üblicherweise eingesetzten Beschichtungsmitteln ist jedoch der nur geringe Festkörpergehalt von im allgemeinen 30 bis 40 Gew.%.

Ferner ist aus der EP-A-321 088 ein Verfahren zur Herstellung einer sterisch stabilisierten, nichtwäßrigen Dispersion eines Polyepoxids gemäß Oberbegriff des Anspruchs 1 bekannt. Nachteilig bei diesem Verfahren ist die nur beschränkt mögliche Herstellung von Dispersionen mit einem definierten Aufbau. Verbesserungsbedürftig bei diesem Verfahren ist die Einarbeitbarkeit von weiteren Harzen. Außerdem sind auch noch verschiedene Eigenschaften der unter Verwendung der Dispersionen hergestellten Beschichtungen, wie z.B. Flexibilität, Porosität sowie Beständigkeit gegen saure Testlösungen, wie z.B. 1%ige Milchsäure oder 3%ige Essigsäure, verbesserungsbedürftig.

Schließlich ist aus der nicht vorveröffentlichten Deutschen Patentanmeldung P 44 23 309.4 ein Verfahren zur Herstellung einer sterisch stabilisierten, nichtwäßrigen Dispersion eines Polyepoxidharzes sowie deren Verwendung in Beschichtungsmitteln für die Innenlackierung von Emballagen bekannt. Der Zusatz von Phenolharzen zu den Beschichtungsmitteln ist jedoch in dieser Anmeldung nicht beschrieben.

Der vorliegenden Erfindung liegt somit die Aufgabe zugrunde, ein Beschichtungsmittel auf der Basis einer sterisch stabilisierten, nichtwäßrigen Dispersion eines Polyepoxids zur Verfügung zu stellen, das einen möglichst hohen Festkörpergehalt aufweist und das die Anforderungen, die üblicherweise an die für die Innenlackierung von Dosen eingesetzten Beschichtungsmittel gestellt werden, erfüllt. Diese Beschichtungsmittel sollten daher z.B. gute Applikationseigenschaften aufweisen sowie eine gute Haftung, gute Flexibilität und eine gute Sterilisationsbeständigkeit sowie Porenfreiheit der resultierenden Beschichtungen gewährleisten. Darüber hinaus sollte das Beschichtungsmittel einfach und kostengünstig herstellbar sein.

Diese Aufgabe wird überraschenderweise durch ein Beschichtungsmittel der eingangs genannten Art gelöst, das dadurch gekennzeichnet ist, daß
i) die nichtwäßrige Dispersion dadurch hergestellt worden ist, daß
   1.) die Epoxidharzkomponente (A) in einer ersten Stufe (Stufe (1)) mit mindestens einem Diol (B) und ggf. der Komponente (C) zu einem phenolische Hydroxylgruppen als Endgruppen enthaltenden Reaktionsprodukt, das ein Phenoxyequivalentgewicht von mindestens 256 aufweist, umgesetzt worden ist und
   2.) anschließend in Stufe (2) 50 bis 100, vorzugsweise 80 bis 100 % der im in Stufe (1) erhaltenen Reaktionsprodukt enthaltenen phenolischen Hydroxylgruppen mit weiterer Epoxidharzkomponente (A) und/oder der Komponente (C) umgesetzt worden sind, und
ii.) das Beschichtungsmittel mindestens ein Phenolharz enthält.

Gegenstand der vorliegenden Anmeldung ist außerdem noch ein Verfahren zur Herstellung der Beschichtungsmittel sowie deren Verwendung für die Beschichtung von Emballagen.

Es ist überraschend und war nicht vorhersehbar, daß die Beschichtungsmittel trotz eines sehr hohen Festkörpergehaltes gute Applikationseigenschaften aufweisen und dabei gleichzeitig auch die anderen Anforderungen erfüllen, die üblicherweise an Beschichtungsmittel für die Innenlackierung von Emballagen gestellt werden. So weisen die aus den erfindungsgemäßen Beschichtungsmitteln hergestellten Beschichtungen eine gute Haftung und gute Flexibilität, eine gute Sterilisationsbeständigkeit sowie Porenfreiheit auf. Vorteilhaft ist ferner, daß die Beschichtungsmittel einfach und kostengünstig herstellbar sind. Schließlich ist es von Vorteil, daß die Beschichtungen eine hohe Porenfreiheit aufweisen.

Im folgenden werden nun zunächst die zur Herstellung der erfindungsgemäßen Beschichtungsmittel eingesetzten Komponenten näher erläutert.

Zur Herstellung der nichtwäßrigen Dispersion des Polyepoxids werden Diole (B) der Formel HOROH (I), eingesetzt, in der R eine Gruppe der Formel -Ph-D-Ph-(II) ist, worin Ph eine Phenylen- und D eine Methylen- oder eine Propylengruppe ist.

Bevorzugt wird als Diol (B) Bisphenol A eingesetzt.

Zur Herstellung der erfindungsgemäß eingesetzten, nichtwäßrigen Dispersion des Polyepoxids geeignete Epoxidharze (A) sind insbesondere für die Stufe (1) Epoxide mit im Mittel mindestens 2 Epoxidgruppen pro Molekül. Bevorzugt werden als Komponente (A) Epoxidharze eingesetzt, die bei Raumtemperatur flüssig sind. Besonders bevorzugt werden Epoxidharze mit einem Epoxidequivalentgewicht von 150 bis 450, bevorzugt von 170 bis 192, eingesetzt.

Für den Einsatz sind insbesondere aromatische Epoxidharze (A), daneben aber auch aliphatische und araliphatische Epoxidharze (A) geeignet. Als Beispiele seien Diglycidylether von Polyphenolen, Diglycidylether von Dialkoholen und Diglycidylester von Dicarbonsäuren genannt. Bevorzugt werden Diglycidylether von Polyphenolen, insbesondere Diglycidylether von Bisphenol A, und epoxidierte Novolakharze, besonders bevorzugt Epoxidharze auf Basis von Bisphenol A, eingesetzt. Es können selbstverständlich auch Gemische unterschiedlicher Epoxidharze eingesetzt werden. Ferner ist es selbstverständlich auch möglich, in der Stufe (1) und der Stufe (2) unterschiedliche Epoxidharze (A) einzusetzen. Insbesondere ist es möglich, in der Stufe (2) auch Epoxidharze (A) mit einer Funktionalität < 2, also beispielsweise auch Monoepoxide, einzusetzen.

Geeignete Epoxidharze (A) sind beispielsweise die unter den folgenden Namen im Handel erhältlichen Produkte auf Basis Bisphenol A:
Epikote® 828 der Firma Shell-Chemie;
DER® 330 und 333 der Firma Dow Chemicals;
GY® 250 der Firma Ciba-Geigy.

Geeignet sind ferner beispielsweise die unter den folgenden Namen im Handel erhältlichen Produkte auf Basis epoxidierter Novolakharze:
XPY 307 und EPN 1139 der Firma Ciba-Geigy und DEN® 438 der Firma Dow Chemicals.

Geeignet sind ferner auch die in der EP-A-321 088 auf der Seite 2, Zeile 46, bis Seite 5, Zeile 36, und in Karsten, Lackrohstofftabellen, 9. Auflage, Kapitel 31, Abschnitte 31.1 und 31.2, beschriebenen Epoxidverbindungen.

Ggf. können geringe Mengen, bevorzugt weniger als 20 Gew.-%, besonders bevorzugt von 1 bis 15 Gew.-%, des Diols (B) und/oder der Epoxidharzkomponente (A) durch andere Komponenten (C) ersetzt sein, die mit der Epoxidharzkomponente (A) bzw. mit dem in Stufe (1) erhaltenen Reaktionsprodukt umgesetzt werden. Insbesondere werden als Komponente (C) difunktionelle Verbindungen eingesetzt. Durch die Verwendung dieser weiteren Verbindungen (C) können gezielt die physikalischen Eigenschaften der entstehenden Polyepoxidharze verbessert werden.

Beispielsweise können so als Komponente (C) für die Umsetzung mit dem Epoxidharz geringe Mengen Adipinsäure oder Dimerfettsäure oder andere flexibilisierende Komponenten eingebaut werden. Weiterhin können hierfür Polyester, Polyacrylate, Diamine und Fettsäureamide eingesetzt werden. Bevorzugt wird die Komponente (C) in der Stufe (1) umgesetzt.

Die Umsetzung des Diols (B) und ggf. der Komponente (C) mit der Epoxidharzkomponente (A) erfolgt in Gegenwart eines sterischen Dispersionsstabilisators.

Ein sterischer Dispersionsstabilisator ist eine Verbindung mit einem Teil, der mit dem zu stabilisierenden Epoxidharz assoziiert (üblicherweise als Ankerkomponente bezeichnet), und einem Teil, der mit dem Lösemittel assoziiert (üblicherweise als solvatisierte Komponente bezeichnet).

Geeignete sterische Dispersionsstabilisatoren sind bekannt und beispielsweise in der EP-A-321 088 auf Seite 5, Zeile 41, bis Seite 6, Zeile 1, und in K.E.J. Barrett, Dispersionpolymerization in Organic Media, John Wiley and Sons, 1975, beschrieben.

Beispielsweise können Dispersionsstabilisatoren eingesetzt werden, bei denen die Ankerkomponente auf einem Acrylatpolymerisat basiert. Geeignete Acrylatpolymerisate sind Homo- und Copolymerisate von (Meth)Acrylsäurealkylestern (z.B. Polymethylmethacrylat, Polyethylmethacrylat, Polymethylacrylat, Polyethylacrylat, Polyethylacrylat/Polyethylmethacrylat u.a.) sowie Copolymerisate von (Meth)Acrylsäurealkylestern und Methacryl- und/oder Acrylsäure, wobei der Anteil an einpolymerisierter (Meth)Acrylsäure üblicherweise unter 10 Gew.-% liegt. Ferner können in die Copolymerisate noch geringe Anteile anderer ethylenisch ungesättigter Monomerer einpolymerisiert sein, beispielsweise geringe Mengen Crotonsäure, Isocrotonsäure, Maleinsäure und/oder Alkylester dieser Säuren.

Die solvatisierte Komponente kann ein Poly-C6-18-alkylester, wie z.B. Poly-2-ethylhexylacrylat, ein Polyester, wie z.B. Poly-12-hydroxystearinsäure, oder ein Polymerisat, wie z.B. vom Polybutadien abgeleitete Harze, sein.

Die Dispersionsstabilisatoren können nach den üblicherweise angewandten Methoden hergestellt werden, indem beispielsweise das Umsetzungsprodukt von Poly-12-hydroxystearinsäure mit Glycidyl(meth)acrylat mit den gewünschten Acrylatmonomeren copolymerisiert wird oder indem beispielsweise das als Ankerkomponente gewünschte Polymerisat mit dem als solvatisierte Komponente gewünschten Polymerisat (z.B. vom Polybutadien abgeleitet) umgesetzt wird.

Zur Herstellung der nichtwäßrigen Dispersion werden insbesondere Lösemittel eingesetzt, die das entstehende Polyepoxid nicht lösen, beispielsweise unpolare organische Lösemittel. Bevorzugt werden als Lösemittel aliphatische Kohlenwasserstoffe eingesetzt, die ggf. noch bis zu 20 Gew.-% andere Lösemittel, z.B. aromatische Kohlenwasserstoffe, wie z.B. Xylol und Solvesso® 150, enthalten können.

Bevorzugt werden als Lösemittel hochsiedende aliphatische Kohlenwasserstoffe, insbesondere solche mit einem Siedepunkt zwischen 120 und 280 °C, eingesetzt. Beispiele für geeignete Lösemittel sind Hydrosol® P 230 EA der Firma Deutsche Hydrocarbures GmbH, Exxold® 240 - 270, Norpar® 12 und Isopar® M der Firma Deutsche Exxon Chemical GmbH.

Bevorzugt wird die Menge an Lösemittel so gewählt, daß die Umsetzung des Diols (B) mit der Epoxidharzkomponente (A) (Stufe (1)) bei einem Dispersionsfestkörpergehalt von 20 bis 80 Gew.-%, bevorzugt von 50 bis 70 Gew.-% und die Umsetzung des Reaktionsproduktes aus Stufe(1) mit dem Diol (B) (Stufe (2)) bei einem Dispersionsfestkörpergehalt von 25 bis 85 Gew.-%, bevorzugt von 55 bis 75 Gew.-%, durchgeführt wird.

Die Umsetzung des Diols (B) mit der Epoxidharzkomponente (A) erfolgt bevorzugt in Gegenwart eines Katalysators. Als Katalysator geeignet sind beispielsweise Alkalimetallcarbonate, wie Kalium- und Natriumcarbonat, Alkalimetallhydroxide, wie Natrium- und Kaliumhydroxid, quaternäre Ammoniumsalze, Amine, wie Dibenzylamin, sowie Trialkylphosphoniumsalze, wie z.B. Triphenylethylphosphoniumjodid und Triphenylethylphosphoniumacetat. Bevorzugt wird als Katalysator Triphenylethylphosphoniumjodid eingesetzt.

Es ist erfindungswesentlich, daß die Herstellung der sterisch stabilisierten, nichtwäßrigen Dispersion in einem Zweistufenverfahren erfolgt.

In der ersten Stufe des Verfahrens wird die Epoxidharzkomponente (A) mit mindestens einem Diol (B) und ggf. der Komponente (C) zu einem phenolische Hydroxylgruppen als Endgruppen enthaltenden Reaktionsprodukt mit einem Phenoxyequivalentgewicht von mindestens 246, vorzugsweise von mindestens 642, besonders bevorzugt von 642 bis 26 500, umgesetzt. Die Mengen an Epoxidharzkomponente (A) und Diol (B) werden dabei bevorzugt so gewählt, daß 1 Äquivalent Epoxidharzkomponente (A) mit 3 bis 1,001 Äquivalenten, bevorzugt 1,5 bis 1,01 Äquivalenten, mindestens eines Diols (B) umgesetzt werden, wobei höchstens 20 Gew.% der Komponente (B) durch die Komponente (C) ersetzt sein können.

Die Umsetzung der Epoxidharzkomponente (A) mit dem bzw. den Diolen (B) und ggf. (C) in der ersten Stufe des Verfahrens erfolgt bevorzugt dadurch, daß das oder die Epoxidharze, das oder die Diole und ggf. (C), der Dispersionsstabilisator und das Lösemittel zusammengegeben und unter Rühren langsam erwärmt werden. Bevorzugt wird auf Temperaturen zwischen 80 und 140°C erwärmt. Bei dieser leicht erhöhten Temperatur wird bevorzugt zunächst einige Zeit dispergiert. Danach wird ggf. der Katalysator zugegeben und auf die gewünschte Reaktionstemperatur aufgeheizt. Die Umsetzung des Epoxidharzes mit dem Diol und ggf. (C) erfolgt dabei üblicherweise bei einer Temperatur zwischen 120 und 250°C, bevorzugt bei einer Temperatur zwischen 160 und 180°C.

Daneben ist es aber in der ersten Stufe des Verfahrens auch möglich, zunächst die Epoxidharzkomponente (A) mit dem Lösemittel und dem Dispersionsstabilisator vorzulegen und durch Rühren und ggf. leichtes Erwärmen, bevorzugt auf Temperaturen zwischen 80 und 140°C, die Epoxidharzkomponente zu dispergieren. Danach kann dann die Dispersion auf die gewünschte Reaktionstemperatur erhitzt und das Diol (B) und ggf. (C) zugegeben werden.

In einer zweiten Stufe werden dann 50 bis 100, vorzugsweise 80 bis 100 % der im in Stufe (1) erhaltenen Reaktionsprodukt enthaltenen phenolischen Hydroxylgruppen mit weiterer Epoxidharzkomponente (A) und/oder der Komponente (C) umgesetzt. Bevorzugt werden in der zweiten Stufe 50 bis 100, vorzugsweise 80 bis 100 % der im in Stufe (1) erhaltenen Reaktionsprodukt enthaltenen phenolischen Hydroxylgruppen mit weiterer Epoxidharzkomponente (A) umgesetzt.

Die Umsetzung mit der Epoxidharzkomponente und/oder ggf. weiteren modifizierenden Komponenten (C) erfolgt bevorzugt dadurch, daß das Epoxidharz und ggf. die weiteren modifizierenden Komponenten bei einer erhöhten Temperatur, bevorzugt bei einer Temperatur von 60 bis 120°C, langsam zugetropft werden. Ferner ist es möglich, die Epoxidharzkomponente in der Stufe (2) des Verfahrens auf einmal zuzugeben. Bevorzugt wird nach Beendigung der Epoxidharzzugabe bzw. Zugabe der modifizierenden Komponenten erneut Katalysator zugegeben und die Temperatur erhöht, bevorzugt auf Werte zwischen 160 und 180°C. Dann wird die Reaktion solange fortgeführt, bis der gewünschte Umsetzungsgrad erreicht ist.

Daneben ist es aber auch möglich, die Epoxidharzkomponente und/oder die weiteren modifizierenden Komponenten (C) bei Raumtemperatur zu dem in Stufe (1) des Verfahrens erhaltenen phenoxyterminierten Produkt zu geben, dann auf eine Temperatur von 120 bis 180°C aufzuheizen, zu dispergieren und die Reaktion solange fortzuführen, bis der gewünschte Umsetzungsgrad erreicht ist.

Die auf die oben beschriebene Art und Weise erhaltenen nichtwäßrigen Dispersionen werden zur Herstellung der erfindungsgemäßen Beschichtungsmittel mit einem Phenolharz oder einer Mischung aus Phenolharzen als Vernetzungsmittel kombiniert.

Bevorzugt eingesetzte Phenolharze sind Reaktionsprodukte von Phenol, substituierten Phenolen und Bisphenol-A mit Formaldehyd, die vorzugsweise unter alkalischen Bedingungen hergestellt worden sind. Unter derartigen Bedingungen wird die Methylolgruppe entweder ortho- oder para-ständig mit dem aromatischen Ring verknüpft.

Als Veretherungsalkohol für die methylolischen Hydroxylgruppen werden niedere Alkohole, wie beispielsweise Ethanol, Propanol, Butanol und iso-Butanol, eingesetzt, wobei n-Butanol bevorzugt als Veretherungsalkohol eingesetzt wird.

Besonders bevorzugt werden zur Herstellung der Beschichtungsmittel niedrigviskose Phenolharze eingesetzt. Insbesondere werden Phenolharze eingesetzt, deren 50 bis 60 %ige Lösungen eine Viskosität bei 20°C von weniger als 1000 mPa·s, bevorzugt von 300 bis 900 mPa·s aufweisen.

Beispiele für als Vernetzungsmittel geeignete Phenolharze sind die im Handel unter den folgenden Handelsnamen erhältlichen Produkte:
Phenodur® Harze, wie z.B. Phenodur® PR 285, der Firma Hoechst AG
Epikure® Harze, wie z.B. Epikure® DX-200-N-60, der Firma Shell Chemicals
Bakelite® Harze, wie z.B. Bakelite® 7576 LB, der Firma Rütgerswerke AG
Uravar® Harze, wie z.B. Uravar® FB 209, der Firma DSM
Varcum® Harze, wie z.B. Varcum® 2890, der Firma Reichold Chemie GmbH.

Ganz besonders bevorzugt werden zur Herstellung der erfindungsgemäßen Beschichtungsmittel die im Handel unter den folgenden Namen erhältlichen Produkte eingesetzt:
Phenodur® PR 285 der Firma Hoechst AG, ein handelsübliches, härtbares, nichtplastifiziertes Phenolharz, 55%ig in Isobutanol, mit einer Viskosität, gemessen als DIN 4 Auslaufzeit bei 20°C, von 45 - 70 s und einer dynamischen Viskosität nach DIN 53177 bei 20°C von 230 - 300 mPa·s
Epikure® DX-200-N-60, der Firma Shell Chemicals, ein handelsübliches Resol-Phenol-Formaldehydharz, 60%ig in n-Butanol, mit einer Viskosität /Brookfield) bei 25°C von 450 - 800 mPa·s
Bakelite® 7576 LB, der Firma Rütgerswerke AG, ein handelsübliches verethertes Phenol-Resol-Harz, 60 %ig in Xylol/Butanol, mit einer Viskosität nach DIN 53217 bei 20°C von 500 - 700 mPa·s.

Die erfindungsgemäßen Beschichtungsmittel können noch weitere Bindemittel wie z.B. Epoxidharze, Polyesterharze, Polyacrylatharze oder Polyurethanharze enthalten.

Die erfindungsgemäßen Beschichtungsmittel können außer dem zur Herstellung der nichtwäßrigen Dispersion eingesetzten Lösemittel ggf. noch weitere Lösemittel enthalten. Als Beispiele für geeignete weitere Lösemittel seien aromatische, aliphatische und cycloaliphatische Kohlenwasserstoffe, wie z.B. Solventnaphta®, verschiedene Solvesso®- und Shellso1®-Typen, Deasol und verschiedene Testbenzine genannt. Diese weiteren Lösemittel werden in einer solchen Menge eingesetzt, daß der Gesamtgehalt der Beschichtungsmittel an Lösemittel (also einschließlich des Lösemittelanteils der nichtwäßrigen Dispersion und ggf. des Phenolharzes) 30 bis 50 Gew.-% beträgt.

Das weitere Lösemittel kann zur Einstellung einer für die Applikation der Beschichtungsmittel günstigen Viskosität und/oder zur Anteigung der Phenolharze und/oder Pigmente bzw. Füllstoffe eingesetzt werden.

Für den Einsatz in den erfindungsgemäßen Beschichtungsmitteln geeignet sind ferner organische und anorganische Pigmente, wie z.B. Titandioxid, Eisenoxide und Diarylide. Bevorzugt werden die Beschichtungsmittel aber unpigmentiert eingesetzt.

Für den Einsatz in den erfindungsgemäßen Beschichtungsmitteln geeignet sind ferner üblicherweise eingesetzte Füllstoffe, wie beispielsweise Talkum, Glimmer, Kaolin, Kreide, Quarzmehl, Schiefermehl, Bariumsulfat, verschiedene Kieselsäuren, Silikate und dergleichen. Bervorzugt sind aber Beschichtungsmittel, die keine oder nur transparente Füllstoffe enthalten.

Außerdem können die erfindungsgemäßen Beschichtungsmittel noch übliche Hilfs- und Zusatzstoffe, wie z.B. Verlaufsmittel, Benetzungsmittel, Entschäumer, PVC-freie Weichmacher (z.B. Adipinsäureester), Wachs (z.B. Polyolefinwachse, Carnaubawachse, Bienenwachs, Lanolinwachs) und Vernetzungskatalysatoren (z.B. Säurekatalysatoren, wie z.B. Phosphorsäurelösungen und p-Toluolsulfonsäurelösungen) enthalten.

Bevorzugt enthalten die erfindungsgemäßen Beschichtungsmittel
- 30 bis 60 Gew.-%, bevorzugt 35 bis 50 Gew.-%, einer oder mehrerer erfindungsgemäßer nichtwäßriger Dispersionen und
- 5 bis 30 Gew.-%, bevorzugt 15 bis 20 Gew.-%, eines oder mehrerer Phenolharze,
wobei die Gewichtsprozentangaben jeweils auf das Gesamtgewicht des Beschichtungsmittels und den Festkörpergehalt der nichtwäßrigen Dispersion und des Phenolharzes bezogen sind.

Bevorzugt enthalten die Beschichtungsmittel außerdem ggf. noch weitere Lösemittel sowie ggf. weitere Bindemittel, ggf. Pigmente und/oder Füllstoffe sowie ggf. übliche Hilfs- und Zusatzstoffe in üblichen Mengen. Besonders bevorzugt enthalten die erfindungsgemäßen Beschichtungsmittel außer der sterisch stabilisierten, nichtwäßrigen Dispersion und dem Phenolharz noch 0 bis 40 Gew.-% weiterer Bindemittel, 30 bis 50 Gew.-% Lösemittel (einschließlich des Lösemittelanteils der nichtwäßrigen Dispersion), 0 bis 50 Gew.-% Pigmente und/oder Füllstoffe sowie 1 bis 10 Gew.-% übliche Hilfs- und Zusatzstoffe.

Die Herstellung der Beschichtungsmittel erfolgt üblicherweise dadurch, daß zunächst die nichtwäßrige Dispersion eines Polyepoxidharzes hergestellt wird und dann das Phenolharz sowie ggf. Lösemittel, ggf. Pigmente, ggf. Füllstoffe und ggf. übliche Hilfs- und Zusatzstoffe zugegeben und ggf. durch Dispergieren zu dem Beschichungsmittel verarbeitet werden.

Die Beschichtungsmittel werden vorzugsweise zur Beschichtung von Emballagen, insbesondere zur Beschichtung von Lebensmittelverpackungen, eingesetzt. Die Emballagen können dabei aus den unterschiedlichsten Materialien bestehen und unterschiedlichste Geometrien aufweisen. Als Materialien kommen insbesondere Schwarzblech, Weißblech und verschiedene Eisenlegierungen in Frage, die ggf. mit einer Passivierungsschicht auf Basis von Nickel-, Chrom- und Zinkverbindungen versehen sind. Die Emballagen können in Form von beispielsweise Dosenhalbteilen, also Rümpfen und Deckeln, als 3-teilige Dosen und als 2-teilige, abgestreckt tiefgezogene oder anderweitig tiefgezogene Dosen, wie z.B. Getränke- und Konservendosen, beschichtet werden.

Die erfindungsgemäßen Beschichtungsmittel härten im Objekttemperaturbereich von 150 bis 400 °C während einer Zeit von 2 s bis 15 min aus. Sie können durch Walzen, Rakeln, Streichen, Spritzen, Fluten oder Tauchen mittels üblicher Vorrichtungen aufgebracht werden, wobei der Film anschließend zu einem festhaftenden Überzug ausgehärtet wird. Die Beschichtungsmassen werden bevorzugt mittels Walzenauftrag appliziert.

Die Erfindung wird nun anhand von Ausführungsbeispielen näher erläutert. Alle Angaben über Teile und Prozente sind dabei Gewichtsangaben, falls nicht ausdrücklich etwas anderes festgestellt wird.

### 1. Herstellung eines Dispersionsstabilisators

In den Zulauf 1 werden
18,774 Teile Methylmethacrylat und
1,198 Teile Methacrylsäure
eingewogen und gemischt.

In den Zulauf 2 werden
0,533 Teile Dibenzoylperoxid (75%-ig in Wasser) und
9,910 Teile Xylol
eingewogen und gemischt.

Dann werden
- 29,724 Teile: Xylol
- 19,974 Teile: eines handelsüblichen, lösemittelfreien Polymers auf Basis Butadien mit einem zahlenmittleren Molekulargewicht von ca. 5000, mit 15-20% Vinyl-Doppelbindungen, 50-60% 1,4-trans-Doppelbindungen, 25-35% 1,4-cis-Doppelbindungen und einer Jodzahl von ca.450 (Handelsprodukt Lithene N4-5000 der Firma Chemetall GmbH, Frankfurt)
- 19,794 Teile: eines handelsüblichen Gemisches aus paraffinischen und naphthenischen Kohlenwasserstoffen im Bereich C15-C17 mit einem Siedebereich zwischen 230 und 265°C (Handelsprodukt Hydrosol P 230 EA der Firma Deutsche Hydrocarbures GmbH)
gemischt und unter Rühren auf 123°C aufgeheizt. Dann werden der Zulauf 1 und der Zulauf 2 gleichzeitig, aber separat innerhalb von 1,5 h zudosiert. Dann werden
0,093 Teile tert.-Butyl-per-2-ethylhexanoat
zugegeben und die Temperatur 1 h bei 123°C gehalten. Danach werden 9,910 Teile Lösemittel unter leichtem Vakuum abdestilliert. Dann werden 9,910 Teile eines handelsüblichen Gemisches aus paraffinischen und naphthenischen Kohlenwasserstoffen im Bereich C15-C17 mit einem Siedebereich zwischen 230 und 265°C (Handelsprodukt Hydrosol P 230 EA der Firma Deutsche Hydrocarbures GmbH) unter Rühren innerhalb von 30 min bei einer Temperatur von 122-124°C zugetropft. Dann wird abgekühlt.

Die so erhaltene Lösung des Dispersionsstabilisators weist einen Festkörpergehalt (60 min 130°C) von 38,5%, eine Säurezahl von 21 mgKOH/g und eine Viskosität von 2,2 ± 0,2 dPa.s (ICI Platte/Kegel-Viskosimeter, 23°C) auf.

### 2. Herstellung einer nichtwäßrigen Dispersion

- 28,172 Teile: eines handelsüblichen flüssigen Epoxidharzes auf Basis Bisphenol A mit einem Epoxidequivalentgewicht von 188 und einem Molekulargewicht von 350 - 380 (Handelsprodukt Epikote® 880 der Firma Shell Chemie)
- 0,455 Teile: eines handelsüblichen flüssigen Epoxidharzes auf Basis Bisphenol A mit einem Epoxidequivalentgewicht von 188 und einem Molekulargewicht von 350 - 380 (Handelsprodukt Epikote® 880 der Firma Shell Chemie)
- 20,526 Teile: Bisphenol A
- 14,964 Teile: des obenbeschriebenen Dispersionsstabilisators und
- 27,389 Teile: eines handelsüblichen Gemisches aus paraffinischen und naphthenischen Kohlenwasserstoffen im Bereich C15-C17 mit einem Siedebereich zwischen 230 und 265°C (Handelsprodukt Hydrosol® P 230 EA der Firma Deutsche Hydrocarbures GmbH)
werden gemischt und unter langsamen Rühren (ca. 80 Umdrehungen pro Minute) auf 120°C aufgeheizt. Dann wird die Rührergeschwindigkeit auf 300 Umdrehungen pro Minute erhöht und 1 h dispergiert. Dann werden
- 0,018 Teile: Phosphoniumethyltriphenyljodid als Katalysator
zugegeben und die Temperatur auf 170°C erhöht. Es wird solange bei dieser Temperatur gehalten, bis das Phenoxyequivalentgewicht 1990 ist. Dann wird auf 120°C abgekühlt und es werden
- 8,464 Teile: eines handelsüblichen flüssigen Epoxidharzes auf Basis Bisphenol A mit einem Epoxidequivalentgewicht von 188 und einem Molekulargewicht von 350 - 380 (Handelsprodukt Epikote® 880 der Firma Shell Chemie), erhitzt auf 80 bis 120°C
innerhalb von 1 h zugetropft (Stufe (2). Anschließend wird eine Stunde dispergiert. Dann werden
- 0,012 Teile: Phosphoniumethyltriphenyljodid als Katalysator
zugegeben und die Dispersion wird auf 170°C erhitzt. Die Temperatur wird solange gehalten, bis das gewünschte Epoxidequivalentgewicht von 3800 g/mol erreicht ist. Dann wird abgekühlt und das Produkt durch ein Nylonnetz (Maschenweite 30 µm) filtriert.

Die erhaltene Dispersion weist einen Festkörpergehalt (90 min 180°C) von 63,5 % und eine Viskosität (ICI Platte/Kegel-Viskosimeter, 23°C) von 2,9 dPa.s auf. Das erhaltene Polyepoxid weist ein zahlenmittleres Molekulargewicht von 11 375, ein gewichtsmittleres Molekulargewicht von 78 069 und eine Uneinheitlichkeit von 6,9 auf (jeweils gelpermeationschromatographisch bestimmt gegen Polystyrolstandard). Die so erhaltene Dispersion weist eine Lagerstabilität bei 23°C von mehr als 30 Tagen auf.

### Beispiele 1 bis 5

Die in Tabelle 1 angegebenen Komponenten werden durch Rühren zu homogenen Beschichtungsmitteln verarbeitet.

Die Eigenschaften der resultierenden Beschichtungsmittel E1 bis E5 sind in Tabelle 2 dargestellt.

Diese Beschichtungsmittel E1 bis E5 werden nun einschichtig auf Weißblech E 2,8/2,8 appliziert und 12 min bei einer Umlufttemperatur von 200°C eingebrannt. Die Eigenschaften der resultierenden Beschichtung sind in Tabelle 3 dargestellt.

**Tabelle 1:**

| Zusammensetzung der Beschichtungsmittel der Beispiele 1 bis 5 in Teilen | | | | | |
|---|---|---|---|---|---|
| | 1 | 2 | 3 | 4 | 5 |
| NAD¹⁾ | 67,3 | 69,8 | 68,7 | 69 | 80 |
| Phenodur²⁾ | 32,7 | - | - | - | - |
| Bakelite³⁾ | - | 30,2 | - | - | - |
| Epikure⁴⁾ | - | - | 31,3 | - | - |
| Uravar⁵⁾ | - | - | - | 31 | - |
| Varcum⁶⁾ | - | - | - | - | 20 |

| | | | | | |
|---|---|---|---|---|---|
| Erläuterungen zu Tabelle 1: 1) Obenbeschriebene nichtwäßrige Dispersion eines Polyepoxidharzes | | | | | |
| 2) Phenodur® PR 285 der Firma Hoechst AG, ein handelsübliches, härtbares, nichtplastifiziertes Phenolharz, 55%ig in Isobutanol, mit einer Viskosität, gemessen als DIN 4 Auslaufzeit bei 20°C von 45 - 70 s und mit einer dynamischen Viskosität nach DIN 53177 bei 20 °C von 230 - 300 mPa·s | | | | | |
| 3) Bakelite® 7576 LB der Firma Rütgerswerke AG, ein handelsübliches verethertes Phenol-Resol-Harz, 60 %ig in Xylol/Butanol, mit einer Viskosität nach DIN 53217 bei 20°C von 500 - 700 mPa·s. | | | | | |
| 4) Epikure® DX-200-N-60 der Firma Shell Chemicals, ein handelsübliches Resol-Phenol-Formaldehydharz, 60%ig in n-Butanol, mit einer Viskosität /Brookfield) bei 25°C von 450 - 800 mPa.s | | | | | |
| 5) Uravar® FB 209 der Firma DSM Kunstharze, ein handelsübliches, n-Butyliertes, nicht plastifiziertes Phenolharz, 57 %ig in n-Butanol/Toluol = 6:1, mit einer Viskosität bei 23°C von 3500 bis 5000 mPa.s | | | | | |
| 6) Varcum® 2890 der Firma Reichold Chemie GmbH, ein handelsübliches Phenol-Resol-Harz, eingesetzt als 50 %ige Lösung in Butylacetat | | | | | |

**Tabelle 2:**

| Eigenschaften der Beschichtungsmittel der Beispiele 1 bis 5 | | | | | |
|---|---|---|---|---|---|
| | 1 | 2 | 3 | 4 | 5 |
| Viskos. ¹⁾ | 106 s | 36 s | 72 s | 50 s | 34 s |
| FK²⁾ | 58 % | 57 % | 61 % | 56 % | 54 % |
| Farbe³⁾ | gold | hellgold | hellgold | hellgold | hellgold |
| bend⁴⁾ | 30 mm | 45 mm | 25 mm | 40 mm | 60 mm |

| | | | | | |
|---|---|---|---|---|---|
| Erläuterungen zu Tabelle 2: 1) Viskosität gemessen im DIN 4 Auslaufbecher bei 20°C | | | | | |
| 2) Festkörpergehalt (Einbrennrückstand) bei 15 min 200°C | | | | | |
| 3) visuell beurteilte Farbe | | | | | |
| 4) wedge bend Ergebnisse gemäß Vorschrift in Verpackungs-Rundschau 25 (1974), 6, Techn.-wiss. Beilage, Seiten 47 und 48 | | | | | |

**Tabelle 3:**

| Sterilisationseigenschaften der resultierenden Beschichtungen der Beispiele 1 bis 5 | | | | | |
|---|---|---|---|---|---|
| | 1 | 2 | 3 | 4 | 5 |
| Wasser | Gt 0 | Gt 0 | Gt 0 | Gt 0 | Gt 0 |
| | 0/0 | 0/0 | 0/0 | 0/2 - 3 | 0/3 - 4 |
| 3 % NaCl | Gt 0 | Gt 0 | Gt 0 | Gt 0 | Gt 0 |
| | 0/1 | 0/1 | 0/1- 2 | 0/3 - 4 | 0/4 - 5 |
| 3 % HAc | Gt 0 | Gt 0 | Gt 0 | Gt 0 | Gt 1 |
| | 0/1 | 0/2 | 0/1 | 0/4 - 5 | 2/5 |
| 2 % NaCl | Gt 0 | Gt 0 | Gt 0 | Gt 0 | Gt 0 |
| + 3 % | 0/1 | 0/0 - 1 | 0/0 - 1 | 0/3 | 0/4 |
| HAc | | | | | |
| 1 % | Gt 0 | Gt 0 | Gt 0 | Gt 0 | Gt 2 |
| Milchs. | 0/1 | 0/2 | 0/2 | 0/4 - 5 | 3/5 |
| 0,5 g | Gt 0 | Gt 0 | Gt 0 | Gt 0 | Gt 0 |
| Cystein | 0/0 | 0/0 | 0/0 | 0/1 - 2 | 0/3 |
| Marmor. | 1 | 2 - 3 | 3 | 3 | 3 - 4 |
| Erläuterungen zu Tabelle 3: Die Sterilisationsbeständigkeit wurde ermittelt durch Sterilisation der beschichteten Bleche (Ø 99 mm) im Autoklaven bei 129 °C während einer Zeit von 60 min und Einwirken von Wasser bzw. 3%iger Kochsalzlösung (3 % NaCl) bzw. 3%iger Essigsäure (3 % HAc) bzw. 2 %iger Essigsäure und 3 % iger Kochsalzlösung bzw. 1 %iger Milchsäure (Milchs.) bzw. Cysteinlösung (0,5 g Cystein/l Wasser). Im Anschluß an die Sterilisation erfolgte eine Belastung der Prüfbleche mit Kupfersulfatlösung ( 10 % Kupfersulfat, 10 % konzentrierte Salzsäure) während einer Einwirkzeit von 3 min bei Raumtemperatur. Dann erfolgte eine Beurteilung der Haftung nach DIN 53 151, eine visuelle Beurteilung der Wasseraufnahme und der Porosität nach folgender Bewertungsskala: 0 = sehr gut 5 = sehr schlecht. Die Beurteilung der Schwefelfestigkeit (Marmorierung) erfolgte nach der Vorschrift in der Verpackungs-Rundschau 28 (1977), 7, techn.-wiss. Beilage, Seite 58. | | | | | |

## Patentansprüche

1. Beschichtungsmittel auf der Basis einer sterisch stabilisierten, nichtwäßrigen Dispersion, die dadurch herstellbar ist, daß in einem organischen Lösemittel in Gegenwart eines Dispersionsstabilisators mindestens ein Epoxidharz (A) mit im Mittel mindestens 2 Epoxidgruppen pro Molekül mit mindestens einem Diol (B) der Formel HOROH (I), in der R eine Gruppe der Formel -Ph-D-Ph- (II) ist, worin-Ph- eine Phenylen- und D eine Methylen- oder eine Propylengruppe ist, und ggf. mit einer weiteren Komponente (C), die gegenüber Epoxid- oder Hydroxylgruppen reaktive Gruppen aufweist, umgesetzt wird, dadurch gekennzeichnet, daß
i) die nichtwäßrige Dispersion dadurch hergestellt worden ist, daß
1.) die Epoxidharzkomponente (A) in einer ersten Stufe (Stufe (1)) mit mindestens einem Diol (B) und ggf. der Komponente (C) zu einem phenolische Hydroxylgruppen als Endgruppen enthaltenden Reaktionsprodukt, das ein Phenoxyequivalentgewicht von mindestens 246 aufweist, umgesetzt worden ist und
2.) anschließend in Stufe (2) 50 bis 100 % der im in Stufe (1) erhaltenen Reaktionsprodukt enthaltenen phenolischen Hydroxylgruppen mit weiterer Epoxidharzkomponente (A) und/oder der Komponente (C) umgesetzt worden sind, und
ii) das Beschichtungsmittel mindestens ein Phenolharz enthält.

2. Beschichtungsmittel nach Anspruch 1, dadurch gekennzeichnet, daß die nichtwäßrige Dispersion dadurch hergestellt worden ist, daß zumindest in Stufe (1) des Verfahrens als Komponente (A) mindestens ein bei Raumtemperatur flüssiges Epoxidharz eingesetzt worden ist.

3. Beschichtungsmittel nach Anspruch 1 oder 2, dadurch gekennzeichnet, daß die nichtwäßrige Dispersion dadurch hergestellt worden ist, daß als Komponente (A) mindestens ein Epoxidharz mit einem Epoxidequivalentgewicht von 150 bis 450 eingesetzt worden ist.

4. Beschichtungsmittel nach einem der Ansprüche 1 bis 3, dadurch gekennzeichnet, daß die nichtwäßrige Dispersion dadurch hergestellt worden ist, daß geringe Mengen des Diols (B) und/oder der Epoxidharzkomponente (A) durch andere difunktionelle Verbindungen (C) ersetzt worden sind.

5. Beschichtungsmittel nach einem der Ansprüche 1 bis 4, dadurch gekennzeichnet, daß die nichtwäßrige Dispersion dadurch hergestellt worden ist, daß die Umsetzungen in Stufe (1) bei einem Dispersionsfestkörpergehalt von 20 bis 80 Gew.-%, bevorzugt von 50 bis 70 Gew.-%, und in Stufe (2) bei einem Dispersionsfestkörpergehalt von 25 bis 85 Gew.-%, bevorzugt von 55 bis 75 Gew.-%, durchgeführt worden sind.

6. Beschichtungsmittel nach einem der Ansprüche 1 bis 5, dadurch gekennzeichnet, daß die nichtwäßrige Dispersion dadurch hergestellt worden ist, daß in Stufe (1) 1 Äquivalent der Epoxidharzkomponente (A) mit 3 bis 1,001 Äquivalenten, vorzugsweise 1,5 bis 1,01 Äquivalenten der Diolkomponente (B) umgesetzt worden sind.

7. Beschichtungsmittel nach einem der Ansprüche 1 bis 6, dadurch gekennzeichnet, daß die nichtwäßrige Dispersion dadurch hergestellt worden ist, daß ein Stabilisator, der eine solvatisierte, von Polybutadien abgeleitete Komponente umfaßt, und bevorzugt ein Stabilisator, der eine mit dem Epoxidharz assoziierte Ankerkomponente, vorzugsweise eine Ankerkomponente auf Basis eines Homopolymeren aus Methylmethacrylat oder auf Basis eines Copolymeren aus Methylmethacrylat und Acrylsäure und/oder Methacrylsäure, enthält, eingesetzt worden ist.

8. Beschichtungsmittel nach einem der Ansprüche 1 bis 7, dadurch gekennzeichnet, daß die nichtwäßrige Dispersion dadurch hergestellt worden ist, daß als Lösemittel hochsiedende aliphatische Kohlenwasserstoffe, bevorzugt aliphatische Kohlenwasserstoffe mit einem Siedepunkt zwischen 120 und 280°C, eingesetzt worden sind.

9. Beschichtungsmittel nach einem der Ansprüche 1 bis 8, dadurch gekennzeichnet, daß das Beschichtungsmittel
- 30 bis 60 Gew.-%, bevorzugt 35 bis 50 Gew.-%, einer oder mehrerer nichtwäßriger Dispersionen gemäß Anspruch 1 bis 8 und
- 5 bis 30 Gew.-%, bevorzugt 15 bis 20 Gew.-%, eines oder mehrerer Phenolharze
enthält, wobei die Gewichtsprozentangaben jeweils auf das Gesamtgewicht des Beschichtungsmittels und den Festkörpergehalt der nichtwäßrigen Dispersion und des Phenolharzes bezogen sind.

10. Verwendung der Beschichtungsmittel nach einem der Ansprüche 1 bis 9 zur Beschichtung von Emballagen, insbesondere zur Beschichtung von Lebensmittelverpackungsbehältern.

## Claims

1. Coating compositions based on a sterically stabilized nonaqueous dispersion which can be prepared by reacting, in an organic solvent in the presence of a dispersion stabilizer, at least one epoxy resin (A) containing on average at least 2 epoxide groups per molecule with at least one diol (B) of the formula HOROH (I) in which R is a group of the formula -Ph-D-Ph- (II) in which -Ph- is a phenylene group and D is a methylene or a propylene group, and optionally with a further component (C) which contains groups which are reactive with epoxide or hydroxyl groups, characterized in that
i) the nonaqueous dispersion has been prepared by
1.) reacting the epoxy resin component (A) in a first step (step (1)) with at least one diol (B) and optionally with the component (C) to give a reaction product which contains phenolic hydroxyl groups as end groups and has a phenoxy equivalent weight of at least 246, and
2.) subsequently reacting, in step (2), from 50 to 100 % of the phenolic hydroxyl groups present in the reaction product obtained in step (1) with further epoxy resin component (A) and/or with the component (C), and
ii) the coating composition contains at least one phenolic resin.

2. Coating compositions according to claim 1, characterized in that the nonaqueous dispersion has been prepared by having employed as component (A), at least in step (1) of the process, at least one epoxy resin which is liquid at room temperature.

3. Coating compositions according to claims 1 or 2, characterized in that the nonaqueous dispersion has been prepared by having employed as component (A) at least one epoxy resin having an epoxide equivalent weight of from 150 to 450.

4. Coating compositions according to any of claims 1 to 3, characterized in that the nonaqueous dispersion has been prepared by having replaced small quantities of the diol (B) and/or of the epoxy resin component (A) by other difunctional compounds (C).

5. Coating compositions according to any of claims 1 to 4, characterized in that the nonaqueous dispersion has been prepared by having carried out the reactions in step (1) at a dispersion solids content of from 20 to 80 % by weight, preferably from 50 to 70 % by weight, and in step (2) at a dispersion solids content of from 25 to 85 % by weight, preferably from 55 to 75 % by weight.

6. Coating compositions according to any of claims 1 to 5, characterized in that the nonaqueous dispersion has been prepared by having reacted in step (1) 1 equivalent of the epoxy resin component (A) with from 3 to 1.001 equivalents, preferably from 1.5 to 1.01 equivalents, of the diol component (B).

7. Coating compositions according to any of claims 1 to 6, characterized in that the nonaqueous dispersion has been prepared by having employed a stabilizer which comprises a solvated component derived from polybutadiene, and preferably a stabilizer which comprises an anchor component associated with the epoxy resin, preferably an anchor component based on a homopolymer of methyl methacrylate or based on a copolymer of methyl methacrylate and acrylic acid and/or methacrylic acid.

8. Coating compositions according to any of claims 1 to 7, characterized in that the nonaqueous dispersion has been prepared by having employed as solvents high-boiling aliphatic hydrocarbons, preferably aliphatic hydrocarbons having a boiling point of between 120 and 280°C.

9. Coating compositions according to any of claims 1 to 8, characterized in that the coating composition comprises
- from 30 to 60 % by weight, preferably from 35 to 50 % by weight, of one or more nonaqueous dispersions according to claim 1 to 8 and
- from 5 to 30 % by weight, preferably from 15 to 20 % by weight, of one or more phenolic resins,
the percentages by weight being based in each case on the overall weight of the coating composition and on the solids content of the nonaqueous dispersion and of the phenolic resin.

10. Use of the coating compositions according to any of claims 1 to 9 for the coating of packaging, especially for the coating of foodstuffs packaging containers.

## Revendications

1. Produit de revêtement à base d'une dispersion non aqueuse, stériquement stabilisée, qui peut être préparée par le fait que, dans un solvant organique, en présence d'un agent de stabilisation de dispersion, on fait réagir au moins une résine époxy (A) présentant en moyenne au moins deux groupes époxy par molécule avec au moins un diol (B) de la formule HOROH (I), dans laquelle R représente un groupe de la formule -Ph-D-Ph-(II), où Ph représente un groupe phénylène et D un groupe méthylène ou propylène, et éventuellement avec un autre composant (C), qui présente des groupes réactifs vis-à-vis des groupes époxy ou hydroxyle, caractérisé en ce que
i) la dispersion non aqueuse a été préparée
1.) en faisant réagir le composant de résine époxy (A) dans une première étape [étape (1)] avec au moins un diol (B) et éventuellement le composant (C) pour former un produit réactionnel qui contient des groupes hydroxyle phénoliques comme groupes terminaux et qui présente un poids équivalent de phénoxy d'au moins 246, et
2.) en faisant ensuite réagir, dans l'étape (2), 50 à 100% des groupes hydroxyle phénoliques contenus dans le produit réactionnel obtenu dans l'étape (1) avec du composant de résine époxy supplémentaire (A) et/ou le composant (C),
ii) le produit de revêtement contenant au moins une résine phénolique.

2. Produit de revêtement suivant la revendication 1, caractérisé en ce que la dispersion non aqueuse a été préparée par le fait qu'au moins dans l'étape (1) du procédé, on a introduit, comme composant (A), au moins une résine époxy fluide à la température ambiante.

3. Produit de revêtement suivant l'une des revendications 1 et 2, caractérisé en ce que la dispersion non aqueuse a été préparée en introduisant, comme composant (A), au moins une résine époxy présentant un poids équivalent d'époxy de 150 à 450.

4. Produit de revêtement suivant l'une des revendications 1 à 3, caractérisé en ce que la dispersion non aqueuse a été préparée en remplaçant de faibles quantités du diol (B) et/ou du composant de résine époxy (A) par d'autres composés difonctionnels (C).

5. Produit de revêtement suivant l'une des revendications 1 à 4, caractérisé en ce que la dispersion non aqueuse a été préparée en effectuant les réactions dans l'étape (1) à une teneur en matières solides de dispersion de 20 à 80% en poids, de préférence de 50 à 70% en poids, et dans l'étape (2) à une teneur en matières solides de dispersion de 25 à 85% en poids, de préférence de 55 à 75% en poids.

6. Produit de revêtement suivant l'une des revendications 1 à 5, caractérisé en ce que la dispersion non aqueuse a été préparée en faisant réagir dans l'étape (1) 1 équivalent du composant de résine époxy (A) avec 3 jusqu'à 1,001 équivalent, de préférence 1,5 à 1,01 équivalent, du composant de diol (B).

7. Produit de revêtement suivant l'une des revendications 1 à 6, caractérisé en ce que la dispersion non aqueuse a été préparée en introduisant un agent stabilisant, qui comporte un composant solvaté, dérivé du polybutadiène, et de préférence un agent stabilisant, qui contient un composant d'ancrage associé à la résine époxy, de préférence un composant d'ancrage à base d'un homopolymère de méthacrylate de méthyle ou à base d'un copolymère de méthacrylate de méthyle et d'acide acrylique et/ou d'acide méthacrylique.

8. Produit de revêtement suivant l'une des revendications 1 à 7, caractérisé en ce que la dispersion non aqueuse a été préparée en introduisant, comme solvant, des hydrocarbures aliphatiques à point d'ébullition élevé, de préférence des hydrocarbures aliphatiques présentant un point d'ébullition compris entre 120 et 280°C.

9. Produit de revêtement suivant l'une des revendications 1 à 8, caractérisé en ce que le produit de revêtement contient
- 30 à 60% en poids, de préférence 35 à 50% en poids, d'une ou de plusieurs dispersions non aqueuses suivant l'une des revendications 1 à 8, et
- 5 à 30% en poids, de préférence 15 à 20% en poids, d'une ou de plusieurs résines phénoliques,
les indications en pour-cent en poids se rapportant chacune au poids global du produit de revêtement et à la teneur en matières solides de la dispersion non aqueuse et de la résine phénolique.

10. Utilisation du produit de revêtement suivant l'une des revendications 1 à 9, pour le revêtement d'emballages, en particulier pour le revêtement de récipients d'emballages d'aliments.
